# EUROPEAN PATENT APPLICATION

(11) **EP 2 012 467 A1**
(43) Date of publication of application: **07.01.2009**
(21) Application number: 08158535.8
(22) Date of filing: 19.06.2008
(51) Int. Cl.: H04L 12/26

(54) **Network apparatus test system and network apparatus test method**

(30) Priority: 04.07.2007 JP 2007176250
(71) Applicant: NEC CORPORATION, Tokyo (JP)
(72) Inventor: Kato, Tetsuya, Tokyo 108-8001 (JP)
(74) Representative: Betten & Resch

(57) **Abstract**

An object of the present invention is to provide a network apparatus test system capable of highly efficiently performing a test of a network apparatus, wherein the host server includes a first control unit which transmits a test signal to a monitoring server, the monitoring server includes a second control unit which detects a test request signal and transmits the detected test request signal to a setting server, and which transmits the test signal to the network apparatus, and the setting server includes a storage unit which stores a plurality of IP addresses, and a third control unit which is configured, each time the test request signal is received, to assign one of the plurality of IP addresses to the network apparatus, and to perform processing for generating identification information, and is configured to make the first control unit transmit and the second control unit transmit the test signal.

## Description

This application is based upon and claims the benefit of priority from Japanese Patent Application No. 2007-176250 filed on July 4, 2007, the content of which is incorporated by reference.

### BACKGROUND OF THE INVENTION

### Field of the Invention

The present invention relates to a network apparatus test system and a network apparatus test method, for testing a network apparatus which sends out a test request signal including an identification number when being connected to a network.

### Description of the Related Art

A radio base station which is authorized as the WiFi (Wireless Fidelity), and a radio base station which complies with the standard of WiMAX (Worldwide Interoperability for Microwave Access) are included in a network apparatus which performs voice and data communication via a network. Such radio base stations are tested before shipment by being incorporated into a test system in which a simulated communication environment is provided.

There are proposed various test systems in order to reduce the test time in testing the radio base station, as disclosed in, for example, Japanese Patent Laid-Open No. 2000-68949 (hereinafter referred to as Patent Document 1).

The test system disclosed in Patent Document 1 is based on the premise that one radio base station is tested, and comprises a personal computer, a test jig, a signaling tester, and a BER counter. The radio base station is connected to the test jig and the signaling tester via each network cable.

In the test system described in Patent Document 1, a test start command sent from the personal computer is inputted into the radio base station via the test jig. Then, in the radio base station, a first connection channel for communication with the test jig, and a second connection channel for communication with the signaling tester are respectively set.

When the first connection channel and the second connection channel are set in the radio base station, a test signal whose bit pattern is set beforehand is transmitted from the test jig to the radio base station by using the first connection channel. Then, the test signal is transmitted from the radio base station to the signaling tester by using the second connection channel.

The operation mode of the signaling tester is set so as to return the input signal. Thus, the test signal is returned to the test jig via the radio base station.

In the test system described in Patent Document 1, when the test signal is returned to the test jig, the bit pattern of the returned signal is compared with the bit pattern of the test signal in the BER counter, so that the error rate of the bit pattern is measured. The measured error rate of the bit pattern is notified to the personal computer. Then, in the personal computer, it is determined whether or not the test result is acceptable on the basis of the error rate of the bit pattern, and the determination result is displayed on a screen.

According to the test system described in Patent Document 1, the test time can be reduced, because the test of the radio base station is managed by the personal computer, and because the amount of work done by a computer operator is small,

However, in the test system described in Patent Document 1, only one radio base station can be tested. Therefore, it is thought that the test efficiency may be lowered in the case where a number of radio base stations need to be tested by using the test system described in Patent Document 1.

### SUMMARY OF THE INVENTION

The present invention has been made in order to solve the above described problem. An exemplary object of the present invention is to provide a network apparatus test system and a network apparatus test method, which are capable of highly efficiently testing a network apparatus.

A network apparatus test system according to an exemplary aspect of the invention tests a network apparatus which sends out a test request signal including a predetermined identification number when being connected to a network, and includes a setting server which is able to communicate with the network apparatus via the network, a monitoring server, and a host server connected to the monitoring server. The host server includes a first control unit which transmits to the monitoring server a test signal for making the network apparatus perform predetermined test contents based upon control that is exercised by the setting server. The monitoring server includes a second control unit which detects the test request signal and transmits the detected test request signal to the setting server, and which transmits the test signal to the network apparatus based upon control that is exercised by the setting server. The setting server includes a storage unit which stores a plurality of IP addresses which can be identified in the network, and a third control unit which is configured, each time the test request signal is received, to assign one of the plurality of IP addresses to the network apparatus from which the test request signal is sent, for making the assigned IP address be set by the network apparatus, and to perform processing for generating identification information indicating the identification number and the IP address of the network apparatus, and which is configured to then make the first control unit transmit the test signal and to make the second control unit transmit the test signal by using the identification information.

A network apparatus which sends out a test request signal including a predetermined identification number when being connected to a network, is tested based on a network apparatus test method according to an exemplary aspect of the invention according to the present invention, and the network apparatus test method includes: generating a plurality of IP addresses which can be identified in the network; performing processing configured, each time the test request signal is detected, to assign one of the plurality of IP addresses to the network apparatus from which the test request signal is sent, for making the assigned IP address be set by the network apparatus, and to generate identification information indicating the identification number and the IP address of the network apparatus; and transmitting to the network apparatus a test signal to make the network apparatus perform predetermined test contents by using the identification information.

The above and other objects, features, and advantages of the present invention will become apparent from the following description with reference to the accompanying drawings which illustrate examples of the present invention.

### BRIEF DESCRIPTION OF THE DRAWINGS

FIG. 1 is a block diagram showing a configuration of an exemplary embodiment of a system according to the present invention;
FIG. 2 is a flow chart showing an operation procedure of the system according to the present invention;
FIG. 3 is an illustration for explaining an operation of the system according to the present invention;
FIG. 4 is an illustration for explaining another exemplary embodiment of the system according to the present invention; and
FIG. 5 is a schematic diagram showing a configuration of the other exemplary embodiment of the system according to the present invention.

### DETAILED DESCRIPTION OF THE PREFERRED EMBODIMENTS

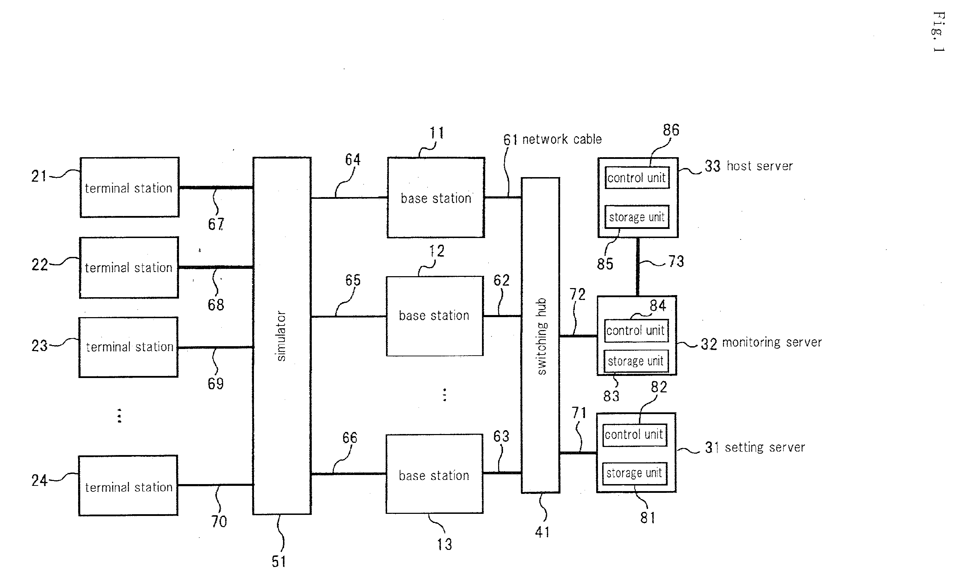

An exemplary embodiment according to the present invention will be described. FIG. 1 is a block diagram showing a configuration of an exemplary embodiment of a system according to the present invention.

The system according to the present exemplary embodiment comprises, as shown in FIG. 1, a plurality of base stations which includes base station 11, base station 12, and base station 13, a plurality of terminal stations which includes terminal station 21, terminal station 22, terminal station 23, and terminal station 24, setting server 31, monitoring server 32, host server 33, switching hub 41, and simulator 51.

Setting server 31 and monitoring server 32 are communicably connected to the plurality of base stations via a test network.

Base stations 11 to 13 are, for example, radio base stations, and are apparatuses to be tested in the present exemplary embodiment. Further, each of base stations 11 to 13 sends out a test request signal in which a MAC (Media Access Control) address is indicated as an identification number when being connected to the test network.

Base station 11 is connected to switching hub 41 via network cable 61. Further, base station 11 is connected to simulator 51 via network cable 64.

Base station 12 is connected to switching hub 41 via network cable 62. Further, base station 12 is connected to simulator 51 via network cable 65.

Base station 13 is connected to switching hub 41 via network cable 63. Further, base station 13 is connected to simulator 51 via network cable 66.

Terminal stations 21 to 24 are communication partners of the respective base stations, and terminal station 21 is connected to simulator 51 via network cable 67. Terminal station 22 is connected to simulator 51 via network cable 68. Terminal station 23 is connected to simulator 51 via network cable 69. Terminal station 24 is connected to simulator 51 via network cable 70.

Note that there can be the thing that terminal station is called mobile station.

Setting server 31 is, for example, a DHCP (Dynamic Host Configuration Protocol) server, and includes storage unit 81 and control unit 82. Further, setting server 31 is connected to switching hub 41 via network cable 71.

Storage unit 81 stores predetermined test information. The test information includes, for example, the MAC address of the apparatus to be tested, a plurality of test IP addresses which can be identified in the test network, and the like.

Control unit 82 controls the operation of setting server 31.

Monitoring server 32 is a server having a gateway function, and comprises storage unit 83 and control unit 84. Further, monitoring server 32 is connected to switching hub 41 via network cable 72, and is connected to host server 33 via network cable 73.

Storage unit 83 stores information which is necessary for monitoring server 32 to communicate with each base station.

Control unit 84 controls the operation of monitoring server 32.

Host server 33 is an FTP (File Transfer Protocol) server or a streaming server, and comprises storage unit 85 and control unit 86.

Storage unit 85 stores test tools which are necessary for testing each base station. The test tools include, for example, a tool for performing the ping which is an operation to check whether or not a certain IP address exists on the network, a tool for performing communication based on the UDP (User Datagram Protocol), and the like.

Control unit 86 controls the operation of host server 33.

Switching hub 41 is configured to perform data transmission between each base station and setting server 31, and between each base station and monitoring server 32, and to perform data transmission between setting server 31 and monitoring server 32. Switching hub 41 comprises a plurality of ports.

Simulator 51 is configured to simulate the radio communication between each base station and each terminal station. According to the test contents, simulator 51 periodically changes the strength and the phase of an input signal, and switches connection between the base station and the terminal station.

Next, the operation of the system according to the present invention will be described.

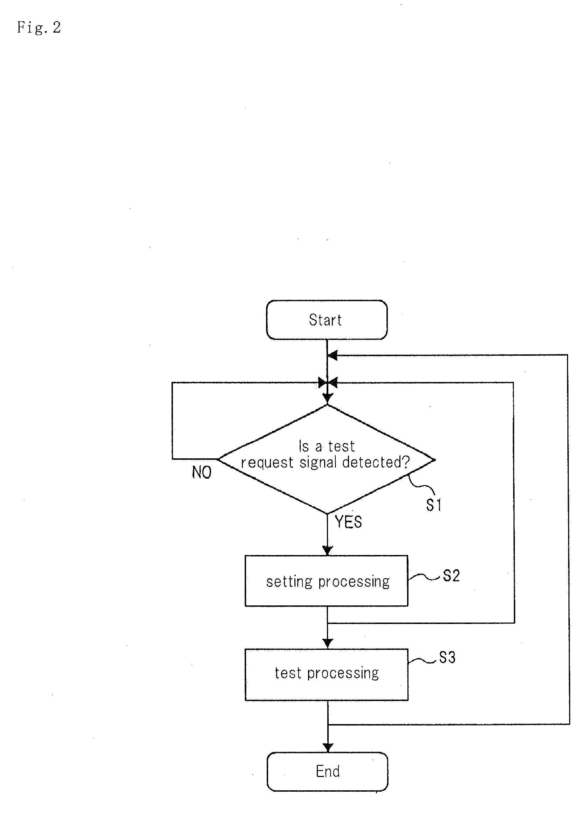

FIG. 2 is a flow chart showing an operation procedure of the system according to the present invention.

First, it is determined whether or not a test request signal sent from a base station is detected by control unit 84 of monitoring server 32 (step S1). Upon detection of a test request signal by control unit 84, setting processing to enable the base station, from which the test request signal is sent, to be tested is performed (step S2).

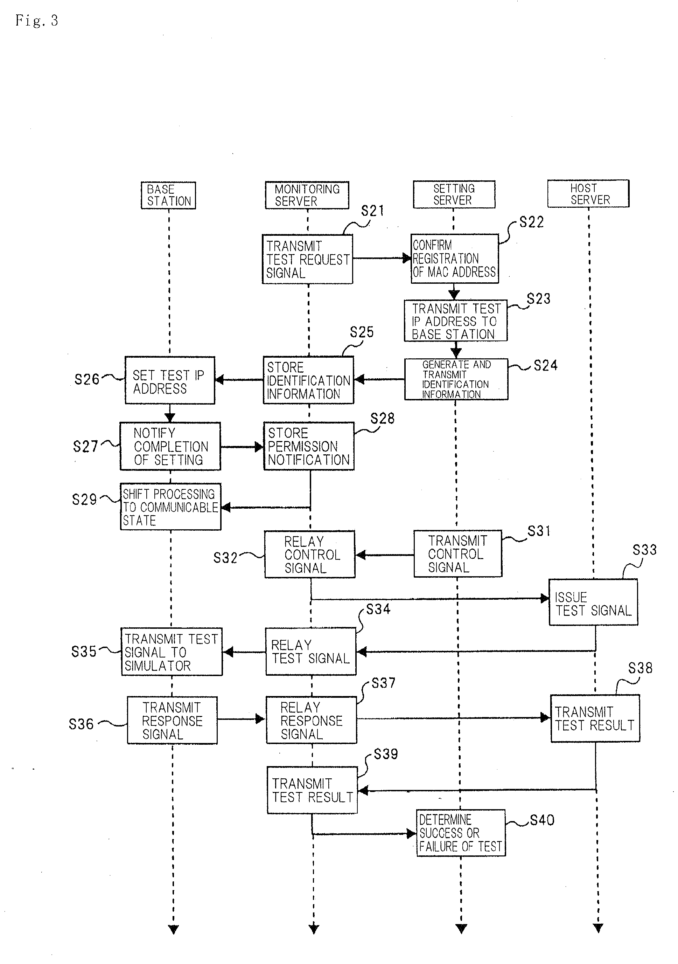

Next, the operation in step S2 will be described in detail with reference to FIG. 3. Note that it is assumed here that a test request signal sent from base station 11 is detected by control unit 84.

Control unit 84 transmits the detected test request signal to setting server 31 (step S21). In setting server 31, control unit 82 confirms whether or not a MAC address included in the test request signal is registered in storage unit 81 (step S22).

Upon confirmation that the MAC Address is registered in storage unit 81, control unit 82 determines a test IP address to be assigned to base station 11 from the plurality of IP addresses stored in storage unit 81, and transmits the determined test IP address to base station 11 (step S23).

Then, control unit 82 transmits identification information, which indicates the MAC Address and the test IP address of base station 11, to monitoring server 32 (step S24). In monitoring server 32, control unit 84 stores the received identification information in storage unit 83 (step S25).

Upon receipt of the test IP address from setting server 31, base station 11 performs the setting of the test IP address (step S26). At this time, when an IP address different from the test IP address is already set, base station 11 stores the already-set IP address in storage means and performs processing to update the IP address to the test IP address.

Upon completion of the setting processing of the test IP address, base station 11 transmits a notification indicating the completion of the setting processing to monitoring server 32 (step S27). In monitoring server 32, control unit 84 transmits to base station 11 a permission notification indicating permission for a shift to a communicable state (step S28). Upon receipt of the permission notification, base station 11 performs processing to shift to the communicable state (step S29).

The operation in step S2 is completed through the operations from step S21 to step S29.

Similar to the case of base station 11, test IP addresses are assigned to base station 12 and base station 13, and identification information is generated. That is, the operations from step S21 to step S29 are repeatedly performed each time control unit 84 detects a test request signal.

Upon completion of the setting processing, the test processing is performed to the base station to which the test IP address is assigned (step S3).

Next, the operation in step S3 will be described in detail with reference to FIG. 3. Here, there will be described a case where base station 11 is tested.

In the setting server, with the lapse of a predetermined time after the identification information of base station 11 is transmitted to monitoring server 32 in step S24, control unit 82 transmits to monitoring server 32 a control signal indicating transmission of a test signal to base station 11 (step S31). In monitoring server 32, control unit 84 relays the control signal to host server 33 (step S32).

In host server 33, upon receipt of the control signal, control unit 86 generates a test signal that is generated by using the test tool stored in storage unit 85 and transmits the generated test signal to monitoring server 32 (step S33). Note that the test signal includes video data and voice data.

In monitoring server 32, control unit 84 relays the received test signal to base station 11 (step S34).

Base station 11 transmits the received test signal to simulator 51 via network cable 64 (step S35). Then, simulator 51 transmits the test signal to a terminal station which is determined beforehand as a communication partner of base station 11 via the network cable. Note that in the present exemplary embodiment, terminal station 21 is determined beforehand as the communication partner of base station 11.

Upon receipt of the test signal via network cable 67, terminal station 21 transmits a response signal to simulator 51 via cable 67. Simulator 51 transmits the response signal to base station 11 via cable 64.

Base station 11 transmits the received response signal to monitoring server 32 (step S36). In monitoring server 32, control unit 84 relays the response signal to host server 33 (step S37). In host server 33, control unit 86 transmits to monitoring server 32 the test result obtained by analyzing the response signal (step S38).

In monitoring server 32, control unit 84 transmits the received test result to setting server 31 (step S39). Then, setting server 31 determines success or failure of the test on the basis of the test result received by control unit 82 (step S40).

The operations from step S31 to step S40 are repeated until the predetermined test is finished.

Further, the operations from step S31 to step S40 are performed in parallel successively from the base station whose setting processing has been completed. Thus, base station 12 and base station 13 are tested even during the testing of base station 11.

Further, control unit 82 makes the base station, whose testing has been completed, perform processing so that the base station is disconnected from the test network.

Note that a base station which received a command indicating the end of the test from control unit 84 by an operation of an operator may disconnect from the test network even during the test. In this case, it is possible for the operator to forcibly end the test.

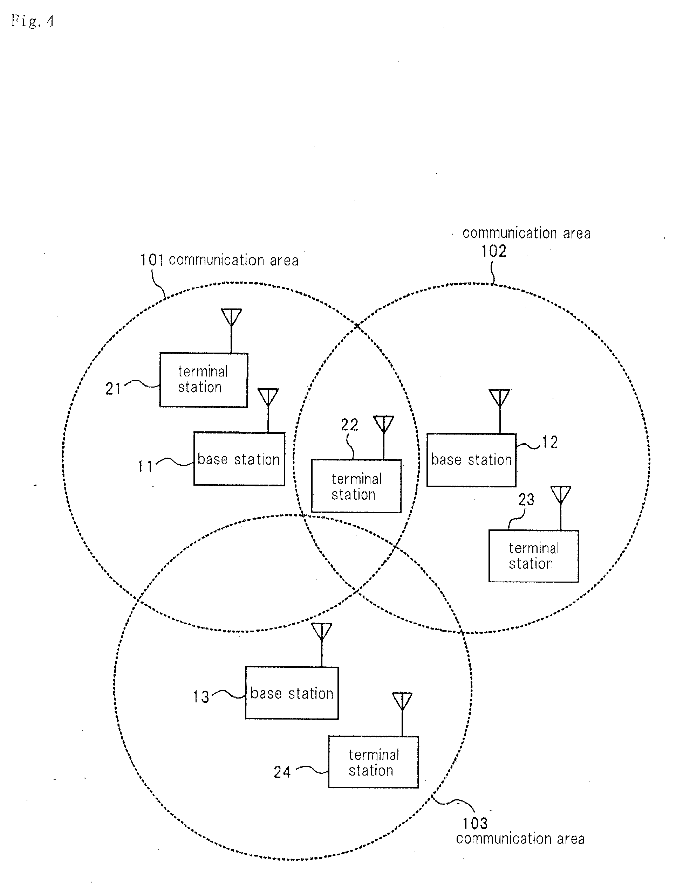

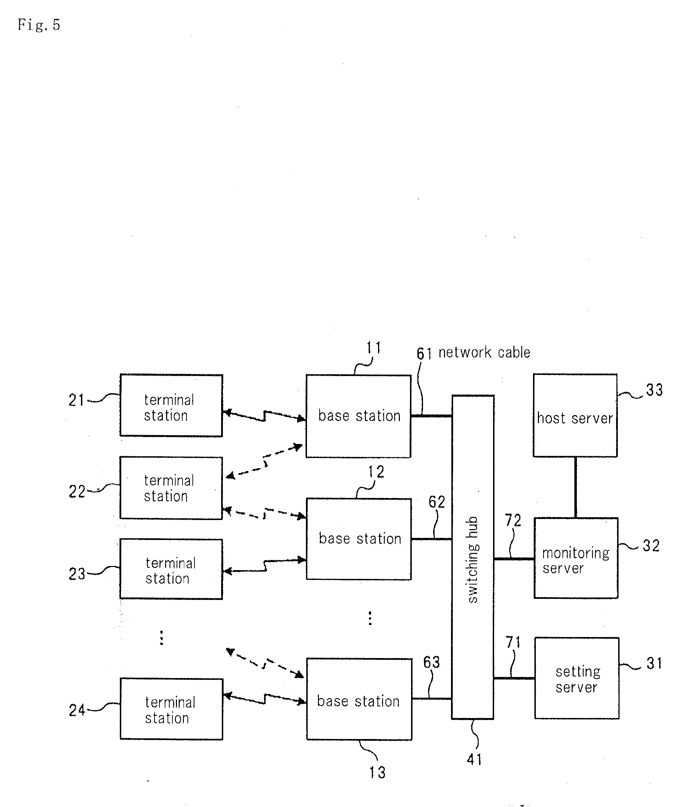

In the present exemplary embodiment, the test is performed in a communication environment that simulates radio communication. For example, in order to perform the test in the radio communication environment as shown in FIG. 4, the system may be configured such that simulator 51 is omitted as shown in FIG. 5. In this case, it is possible to perform the test corresponding to an actual communication environment.

Communication area 101 shown in FIG. 4 is a communication area at the time when base station 11 performs radio communication, and terminal station 21 is arranged in the communication area. Communication area 102 is a communication area at the time when base station 12 performs radio communication, and terminal station 23 is arranged in the communication area. Communication area 103 is a communication area at the time when base station 13 performs radio communication, and terminal station 24 is arranged in the communication area. Terminal station 22 is arranged in the communication area in which communication area 101 and communication area 102 overlap.

Further, testing of a plurality of radio base stations is described in the present exemplary embodiment, but a plurality of terminal stations may also be set as apparatuses to be tested. In this case, the test IP address assigned by setting server 31 to a terminal station is transmitted from setting server 31 to the terminal station through the base station which is to serve as a communications partner of the terminal station.

Further, a communication system configured by a plurality of base stations and a plurality of terminal stations may also be set as a test object. In this case, it is possible to perform a simulation test of the handover, which is performed in the communication with a mobile radio terminal by such a way that simulator 51 switches base stations each of which serves as a communications partner of a specific terminal station.

Note that the apparatus to be tested is not limited to the radio base station and the radio terminal station. However, the apparatus to be tested may be a network apparatus, provided that the network apparatus performs voice and data communication via a network.

In the present exemplary embodiment, each time the test request signal is sent from a plurality of base stations which are the apparatuses to be tested, the test IP address is assigned to each base station, and identification information is generated. Then, the test signal is transmitted to each base station by using the identification information. Thereby, the transmission of the test signal to each of the plurality of base stations can be controlled, and thereby it is possible to test the plurality of base stations.

According to the present exemplary embodiment, a plurality of base stations can be tested, and thereby it is possible to highly efficiently perform testing of the base stations.

Further, in the present exemplary embodiment, the test IP address is assigned after it is confirmed that the MAC address included in the test request signal is registered in setting server 31. Thereby, it is confirmed whether or not the base station, from which the test request signal is sent, is the apparatus to be tested, and hence the test of the base station can be more securely performed.

While preferred embodiments of the present invention have been described using specific terms, such description is for illustrative purposes only, and it is to be understood that changes and variations may be made without departing from the spirit or scope of the following claims.

## Claims

1. A network apparatus test system for testing a network apparatus that sends out a test request signal including a predetermined identification number when being connected to a network comprising:
a setting server that is able to communicate with the network apparatus via the network;
a monitoring server that is able to communicate with the network apparatus via the network; and
a host server connected to the monitoring server, wherein
the host server comprises a first control unit that transmits to the monitoring server a test signal for making the network apparatus perform predetermined test based upon control that is exercised by the setting server,
the monitoring server comprises a second control unit that detects the test request signal and transmits the detected test request signal to the setting server, and that transmits the test signal to the network apparatus based upon control that is exercised by the setting server , and
the setting server comprises a storage unit that stores a plurality of IP addresses that can be identified in the network, and a third control unit, each time it receives the test request signal, to assign one of the plurality of IP addresses to the network apparatus from that the test request signal is sent, for making the assigned IP address be set by the network apparatus, and to perform processing for generating identification information indicating the identification number and the IP address of the network apparatus, and is configured to then make the first control unit transmit the test signal and to make the second control unit transmit the test signal by using the identification information.

2. The network apparatus test system according to claim 1, wherein
the storage unit stores the identification number, and
the third control unit performs the processing after confirming that the identification number that is included in a received test request signal has been stored in the storage unit.

3. A network apparatus test method for testing a network apparatus which sends out a test request signal including a predetermined identification number when being connected to a network comprising:
generating a plurality of IP addresses which can be identified in the network;
performing processing configured, each time the test request signal is detected, to assign one of the plurality of IP addresses to the network apparatus from which the test request signal is sent, for making the assigned IP address be set by the network apparatus, and to generate identification information indicating the identification number and the IP address of the network apparatus; and
transmitting to the network apparatus a test signal to make the network apparatus perform predetermined test by using the identification information.

4. The network apparatus test method according to claim 3, further comprising:
storing the identification number; and
performing the processing after confirming that the identification number which is included in a detected test request signal has been stored.
